# EUROPEAN PATENT APPLICATION

(11) **EP 4 439 924 A1**
(43) Date of publication of application: **02.10.2024**
(21) Application number: 22898693.1
(22) Date of filing: 28.11.2022
(51) Int. Cl.: H02J 13/00, H02J 7/00, H02J 7/35, H02J 3/32, H02J 3/38

(54) **POWER SYSTEM AND CONTROL METHOD**

(30) Priority: 26.11.2021 JP 2021192513
(71) Applicant: Kyocera Corporation, Kyoto-shi, Kyoto 612-8501 (JP)
(72) Inventor: AIKAWA, Shinji, Kyoto-shi, Kyoto 612-8501 (JP)
(74) Representative: TBK
(86) International application number: PCT/JP2022/043789
(87) International publication number: WO 2023/095911

(57) **Abstract**

A power system includes a power storage apparatus installed in a facility connected to a power grid, and a controller configured to control the power storage apparatus. The controller judges whether a first condition to be satisfied by a remaining power storage amount of the power storage apparatus is defined as a condition for switching the power storage apparatus from a connected state in which the facility is connected to the power grid to an independent state in which the facility is disconnected from the power grid, and when the power storage apparatus is a specific power storage apparatus with the first condition defined, the controller carries out specific control for controlling the specific power storage apparatus to make the remaining power storage amount of the specific power storage apparatus satisfy the first condition.

## Description

### TECHNICAL FIELD

The present disclosure relates to a power system and a control method.

### BACKGROUND OF INVENTION

In recent years, a technology (e.g., a virtual power plant (VPP) has been known in which a power storage apparatus is used as a distributed power supply to maintain a power supply-demand balance of a power grid (e.g., Patent Documents 1 and 2). A power storage apparatus may be used as the power supply used in a VPP or the like.

### CITATION LIST

### PATENT LITERATURE

Patent Document 1: WO 2015/041010
Patent Document 2: WO 2016/084396

### SUMMARY

A first aspect is a power system, and the power system includes a power storage apparatus installed in a facility connected to a power grid, and a controller configured to control the power storage apparatus. The controller judges whether a first condition to be satisfied by a remaining power storage amount of the power storage apparatus is defined as a condition for switching the power storage apparatus from a connected state in which the facility is connected to the power grid to an independent state in which the facility is disconnected from the power grid, and when the power storage apparatus is a specific power storage apparatus with the first condition defined, the controller carries out specific control for controlling the specific power storage apparatus to make the remaining power storage amount of the specific power storage apparatus satisfy the first condition.

A second aspect is a control method, and the control method includes controlling a power storage apparatus installed in a facility connected to a power grid. The controlling a power storage apparatus includes judging whether a first condition to be satisfied by a remaining power storage amount of the power storage apparatus is defined as a condition for switching the power storage apparatus from a connected state in which the facility is connected to the power grid to an independent state in which the facility is disconnected from the power grid, and carrying out specific control, when the power storage apparatus is a specific power storage apparatus with the first condition defined, for controlling the specific power storage apparatus to make the remaining power storage amount of the specific power storage apparatus satisfy the first condition.

### ADVANTAGEOUS EFFECT

The present invention makes it possible to provide a power system and a control method capable of appropriately switching the operation of a power storage apparatus from a connected operation to an independent operation.

### BRIEF DESCRIPTION OF THE DRAWINGS

FIG. 1 is a diagram illustrating a power management system 1 according to an embodiment.
FIG. 2 is a diagram illustrating a facility 100 according to the embodiment.
FIG. 3 is a diagram illustrating a power management server 200 according to the embodiment.
FIG. 4 is a diagram illustrating an EMS 160 according to the embodiment.
FIG. 5 is a diagram for explaining an SOC according to the embodiment.
FIG. 6 illustrates a control method according to the embodiment.
FIG. 7 illustrates a control method according to Variation 1.
FIG. 8 illustrates a control method according to Variation 2.
FIG. 9 illustrates a control method according to Variation 3.
FIG. 10 is a diagram for explaining alternative-reading control according to Variation 1.

### DESCRIPTION OF EMBODIMENTS

Embodiments will be described below with reference to the accompanying drawings. Note that in the following description of the drawings, the same or similar components will be denoted by the same or similar reference signs. However, the drawings are schematic.

### Embodiment

### Power Management System

A power management system according to an embodiment will be described below. The power management system may be simply referred to as a power system.

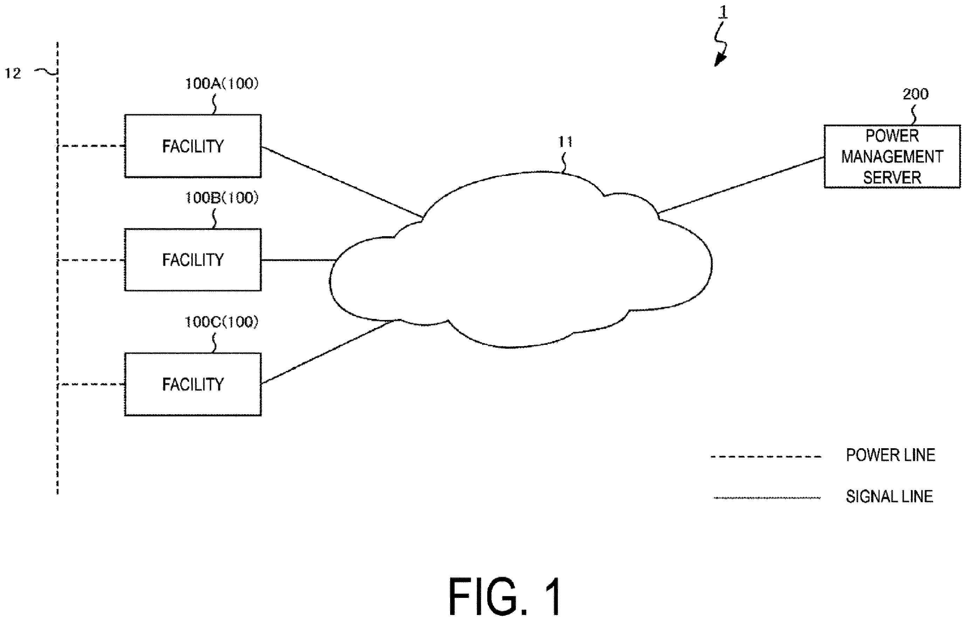

As illustrated in FIG. 1, a power management system 1 includes a facility 100. The power management system 1 may include a power management server 200.

Here, the facility 100 and the power management server 200 are configured to be communicable with each other via a network 11. The network 11 may include the Internet, a dedicated line such as a virtual private network (VPN), or a mobile communication network.

The facility 100 is connected to a power grid 12, and may be supplied with power from the power grid 12 or may supply power to the power grid 12. The power from the power grid 12 to the facility 100 may be referred to as flow power, purchased power, or demand power. The power from the facility 100 to the power grid 12 may be referred to as reverse flow power or selling power. FIG. 1 illustrates facilities 100A to 100C as examples of the facility 100.

Although not particularly limited, the power grid 12 may be a small-scale power grid (micro grid) in which power consumption of a load device is covered by power supplied from a distributed power supply in a specific region. The power grid 12 may be a commercial power grid provided by a business operator such as a power company. The micro grid may be connected to the commercial power grid or may not be connected to the commercial power grid.

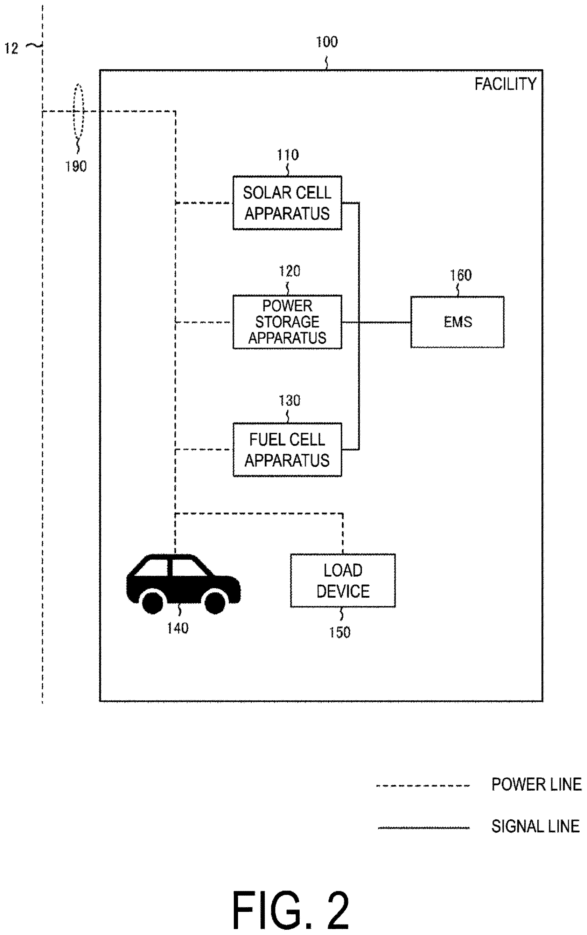

The facility 100 may be and is not particularly limited to a facility such as a residence, a shop, or an office. The facility 100 may be a residential complex including two or more residences. The facility 100 may be a complex facility including at least two facilities of residences, shops, and offices. The details of the facility 100 will be described below (see FIG. 2).

The power management server 200 may be managed by a business operator such as a local power company. The local power company may be a power company operated by a municipality or the like. The power management server 200 may be referred to as an area energy management system (AEMS). The power management server 200 is a server managed by a business operator, such as a power generation operator, a power transmission and distribution operator, a retailer, or a resource aggregator. The resource aggregator may be a power company that adjusts the power supply-demand balance of the power grid 12 in a virtual power plant (VPP). Adjusting the power supply-demand balance may include a transaction of exchanging the reduced demand power (flow power) of the facility 100 for value (hereinafter referred to as negawatt transaction). Adjusting the power supply-demand balance may include a transaction of exchanging the increased reverse flow power for value. The resource aggregator may be a power company that supplies the reverse flow power to the power generation operator, the power transmission and distribution operator, the retailer, or the like, in the VPP.

### Facility

The facility according to the embodiment will be described below. As illustrated in FIG. 2, the facility 100 includes a solar cell apparatus 110, a power storage apparatus 120, a fuel cell apparatus 130, a power storage apparatus 140, a load device 150, and an energy management system (EMS) 160. The facility 100 may include a measurement device 190.

The solar cell apparatus 110 is a distributed power supply that generates power in response to sunlight or other light. For example, the solar cell apparatus 110 is composed of a power conditioning system (PCS) and a solar panel. In the embodiment, the solar cell apparatus 110 may be an example of a power generation apparatus installed in the facility 100. In this case, being installed may mean that the solar cell apparatus 110 and the power grid 12 are connected to each other.

The power storage apparatus 120 is a distributed power supply that charges the power and discharges the power. For example, the power storage apparatus 120 is composed of a PCS and a power storage cell. In the embodiment, the power storage apparatus 120 may be an example of a power storage apparatus installed in the facility 100. The power storage apparatus 120 may be referred to as a stationary power storage apparatus 120 to be distinguished from the power storage apparatus 140. In this case, being installed may mean that the power storage apparatus 120 and the power grid 12 are connected to each other.

The fuel cell apparatus 130 is a distributed power supply that generates power using a fuel. For example, the fuel cell apparatus 130 is composed of the PCS and the fuel cell.

For example, the fuel cell apparatus 130 may be a solid oxide fuel cell (SOFC), a polymer electrolyte fuel cell (PEFC), a phosphoric acid fuel cell (PAFC), and a molten carbonate fuel cell (MCFC).

In the embodiment, the fuel cell apparatus 130 may be an example of a power generation apparatus installed in the facility 100. In this case, being installed may mean that the fuel cell apparatus 130 and the power grid 12 are connected to each other.

The power storage apparatus 140 is a distributed power supply that charges and discharges electrical power. For example, the power storage apparatus 140 is composed of a power storage cell and mounted on an electric vehicle (EV). The power storage apparatus 140 may be connected to a charging apparatus installed in the facility 100. The charging apparatus may include a PCS. The power storage apparatus 140 may be referred to as a vehicle-mounted power storage apparatus 140 to be distinguished from the power storage apparatus 120.

In the embodiment, the power storage apparatus 140 may be an example of a specific power storage apparatus for which a first condition to be satisfied by a remaining power storage amount of the power storage apparatus 140 is defined as a condition for switching the power storage apparatus 140 from a connected state to an independent state. The connected state is a state in which the facility 100 is connected to the power grid 12. The independent state is a state in which the facility 100 is disconnected from the power grid 12. For example, the independent state may be brought about by a power failure of the power grid 12. The power failure may include a planned power failure carried out in accordance with a predetermined plan, or may include an unplanned power failure (for example, a power failure through the whole district) caused by a natural disaster such as a fire, lightning, torrential rain, or a strong wind. The operation of the power storage apparatus 140 in the connected state may be referred to as a connected operation. The operation of the power storage apparatus 140 in the independent state may be referred to as an independent operation.

The first condition may include a condition that the remaining power storage amount of the power storage apparatus 140 is equal to or less than an upper-limit remaining amount. The upper-limit remaining amount is a remaining amount smaller than the total capacity of the power storage apparatus 140. That is, when the first condition is satisfied, a capacity (rechargeable capacity) that can be charged in the power storage apparatus 140 is secured.

Although not particularly limited, the power storage apparatus 120 described above may be an example of a regular power storage apparatus for which the first condition is not defined, unlike the power storage apparatus 140.

The first condition may be defined based on whether the configuration related to a distributed power supply other than the power storage apparatus 140 installed in the facility 100 satisfies a second condition. That is, the first condition may be a condition that is applied when the second condition is satisfied and is not applied when the second condition is not satisfied.

The second condition may be a condition that the configuration related to a distributed power supply other than the power storage apparatus 140 installed in the facility 100 needs to satisfy. For example, the second condition may be a condition that a distributed power supply capable of supplying electrical power to the power storage apparatus 140 in the independent state (hereinafter referred to as a specific distributed power supply) is installed in the facility 100. The specific distributed power supply may be a solar cell apparatus 110. The specific distributed power supply may include the fuel cell apparatus 130 or may not include the fuel cell apparatus 130. The specific distributed power supply may include the power storage apparatus 120 or may not include the power storage apparatus 120. The configuration related to the distributed power supply may be considered to be a configuration indicating whether the specific distributed power supply is installed in the facility 100, indicating the type of the specific distributed power supply, and the like.

The load device 150 consumes electrical power. For example, the load device 150 may include an air conditioner that adjusts the temperature of a predetermined space, or may include a lighting device that adjusts the illuminance of the predetermined space. The air conditioner and the lighting device are each an example of a predetermined device that adjusts the environment of the predetermined space. The air conditioner and the lighting device may be considered to be devices affected by the operation of the power storage apparatus 140. Examples of the load device 150 may include a video device, an audio device, a refrigerator, a washing machine, and a personal computer.

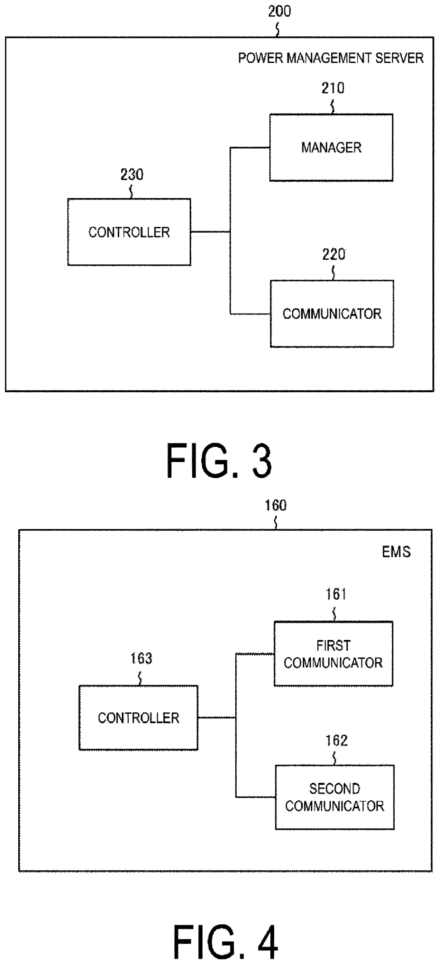

The EMS 160 manages the electrical power related to the facility 100. The EMS 160 may control the solar cell apparatus 110, the power storage apparatus 120, the fuel cell apparatus 130, the power storage apparatus 140, and the load device 150. In the embodiment, the EMS 160 is exemplified as a device for receiving a control command from the power management server 200. Such a device may be referred to as a gateway or simply a control unit. The EMS 160 may be referred to as a local EMS (LEMS) or a home EMS (HEMS) to be distinguished from the power management server 200. Details of the EMS 160 will be described below (see FIG. 4).

The measurement device 190 measures the flow power from the power grid 12 to the facility 100. The measurement device 190 may measure the reverse flow power from the facility 100 to the power grid 12. For example, the measurement device 190 may be a smart meter that belongs to a power company. The measurement device 190 may transmit an information element indicating a measurement result (an integrated value of the flow power or reverse flow power) at a first interval (e.g., 30 minutes) to the EMS 160 for each first interval. The measurement device 190 may transmit an information element indicating a measurement result at a second interval (e.g., one minute) shorter than the first interval to the EMS 160.

### Power Management Server

The power management server will be described below. As illustrated in FIG. 3, the power management server 200 includes a manager 210, a communicator 220, and a controller 230. The power management server 200 is communicable with the facility 100 via the network 11, and may be considered as a server operating on a cloud.

The manager 210 includes a storage medium such as a solid state drive (SSD), a hard disk drive (HDD), or a nonvolatile semiconductor memory, and manages information related to the facility 100. For example, the information related to the facility 100 includes a type of the distributed power supply (the solar cell apparatus 110, the power storage apparatus 120, the fuel cell apparatus 130, or the power storage apparatus 140) provided in the facility 100, and specifications of the distributed power supply provided in the facility 100. The specifications may include a rated generated output of the solar cell apparatus 110, rated charge-discharge power of the power storage apparatus 120, rated output power of the fuel cell apparatus 130, and rated charge-discharge power of the power storage apparatus 140. The specifications may include a rated capacity and a maximum charge-discharge power of the power storage apparatus 120. The specifications may include a rated capacity and a maximum charge-discharge power of the power storage apparatus 140.

The communicator 220 includes a communication module, and communicates with the EMS 160 via the network 11. The communication module may be a wireless communication module compliant with standards such as IEEE 802.11a/b/g/n/ac/ax, ZigBee, Wi-SUN, LTE, 5G, and 6G, or may be a wired communication module compliant with standards such as IEEE 802.3.

For example, the communicator 220 may transmit a control command for the distributed power supply (the solar cell apparatus 110, the power storage apparatus 120, the fuel cell apparatus 130, or the power storage apparatus 140) provided in the facility 100.

The controller 230 may include at least one processor. The at least one processor may be constituted by a single integrated circuit (IC) or by a plurality of circuits (such as integrated circuits and/or discrete circuits) connected communicable with each other.

In the embodiment, the controller 230 constitutes a controller configured to control at least the power storage apparatus 140. The controller 230 may control another distributed power supply (the solar cell apparatus 110, the power storage apparatus 120, or the fuel cell apparatus 130) installed in the facility 100.

When switching from the connected state to the independent state, the controller 230 judges whether the first condition to be satisfied by the remaining power storage amount of the power storage apparatus is defined. When the power storage apparatus is a specific power storage apparatus for which the first condition is defined, the controller 230 carries out specific control for controlling the specific power storage apparatus in such a manner as to make the remaining power storage amount of the specific power storage apparatus satisfy the first condition.

Specifically, when controlling the power storage apparatus 140, which is an example of the specific power storage apparatus, the controller 230 carries out specific control for controlling the power storage apparatus 140 in such a manner as to make the remaining power storage amount of the power storage apparatus 140 satisfy the first condition. In other words, the controller 230 controls the charging or discharging of the power storage apparatus 140 in such a manner that the remaining power storage amount of the power storage apparatus 140 does not exceed the upper-limit remaining amount.

On the other hand, when controlling the power storage apparatus 120, which is an example of the regular power storage apparatus, the controller 230 may control the power storage apparatus 120 regardless of whether or not the remaining power storage amount of the power storage apparatus 120 satisfies the first condition. In other words, the controller 230 may allow the charging or discharging of the power storage apparatus 120, which may cause the remaining power storage amount of the power storage apparatus 120 to exceed the upper-limit remaining amount.

In a case where the configuration related to the distributed power supply satisfies the second condition and the first condition is defined, the controller 230 may carry out specific control for controlling the specific power storage apparatus in such a manner as to make the remaining power storage amount of the specific power storage apparatus satisfy the first condition.

Specifically, when controlling the power storage apparatus 140, which is an example of the specific power storage apparatus, the controller 230 may carry out specific control for controlling the power storage apparatus 140 in such a manner as to make the remaining power storage amount of the power storage apparatus 140 satisfy the first condition in a case where the configuration related to the distributed power supply satisfies the second condition. In other words, the controller 230 controls the charging or discharging of the power storage apparatus 140 in such a manner that the remaining power storage amount of the power storage apparatus 140 does not exceed the upper-limit remaining amount in the case where the second condition is satisfied.

On the other hand, in a case where the configuration related to the distributed power supply does not satisfy the second condition, when the controller 230 controls the power storage apparatus 140 as an example of the specific power storage apparatus, the controller 230 may control the power storage apparatus 140 regardless of whether or not the remaining power storage amount of the power storage apparatus 140 satisfies the first condition. In other words, in the case where the second condition is not satisfied, the controller 230 may allow the charging or discharging of the power storage apparatus 140, which may cause the remaining power storage amount of the power storage apparatus 140 to exceed the upper-limit remaining amount.

To make the remaining power storage amount of the specific power storage apparatus satisfy the first condition at a timing of switching from the connected state to the independent state (hereinafter referred to as a switching timing), the specific control may be such control that controls the specific power storage apparatus before the switching timing.

Here, the controller 230 may carry out the specific control triggered by acquisition of information (for example, an alarm to be described later) indicating a schedule or possibility of switching from the connected state to the independent state, prior to the switching timing. Alternatively, before the switching timing, the controller 230 may carry out the specific control triggered by acquisition of information (constraint information to be described later) specifying the first condition. Alternatively, before the switching timing, the controller 230 may carry out the specific control triggered by another condition (for example, a situation in which the power consumption of the load device 150 exceeds a threshold value). The switching timing may be considered as a term indicating an instantaneous point in time at which the connected state is switched to the independent state.

Specifically, on the assumption that the first condition is satisfied before reaching the switching timing, the controller 230 may allow the charging or discharging of the power storage apparatus 140, which may cause the remaining power storage amount of the power storage apparatus 140 to exceed the upper-limit remaining amount, prior to the switching timing.

### EMS

The EMS according to the embodiment will be described below. As illustrated in FIG. 4, the EMS 160 includes a first communicator 161, a second communicator 162, and a controller 163.

The first communicator 161 is composed of a communication module. The communication module may be a wireless communication module compliant with standards such as IEEE 802.11a/b/g/n/ac/ax, ZigBee, Wi-SUN, LTE, 5G, and 6G, or may be a wired communication module compliant with standards such as IEEE 802.3.

For example, the first communicator 161 communicates with the power management server 200 via the network 11. As described above, the first communicator 161 communicates in accordance with a first protocol. For example, the first communicator 161 receives a first message from the power management server 200 in accordance with the first protocol. The first communicator 161 transmits a first message response to the power management server 200 in accordance with the first protocol.

The second communicator 162 is composed of a communication module. The communication module may be a wireless communication module compliant with standards such as IEEE 802.11a/b/g/n/ac/ax, ZigBee, Wi-SUN, LTE, 5G, and 6G, or may be a wired communication module compliant with standards such as IEEE 802.3.

For example, the second communicator 162 communicates with the apparatus (the solar cell apparatus 110, the power storage apparatus 120, the fuel cell apparatus 130, or the power storage apparatus 140) included in the facility 100. As described above, the second communicator 162 communicates in accordance with a second protocol. For example, the second communicator 162 transmits a second message to the distributed power supply in accordance with the second protocol. The second communicator 162 receives a second message response from the distributed power supply in accordance with the second protocol. As described above, the second message may be a message including an information element for specifying the operation mode of the power storage apparatus 140.

The controller 163 may include at least one processor. The at least one processor may be constituted by a single integrated circuit (IC) or by a plurality of circuits (such as integrated circuits and/or discrete circuits) connected communicable with each other.

For example, the controller 163 may control the distributed power supply (the solar cell apparatus 110, the power storage apparatus 120, the fuel cell apparatus 130, or the power storage apparatus 140) provided in the facility 100 based on a control command received from the power management server 200.

### Capacity of Power Storage Apparatus

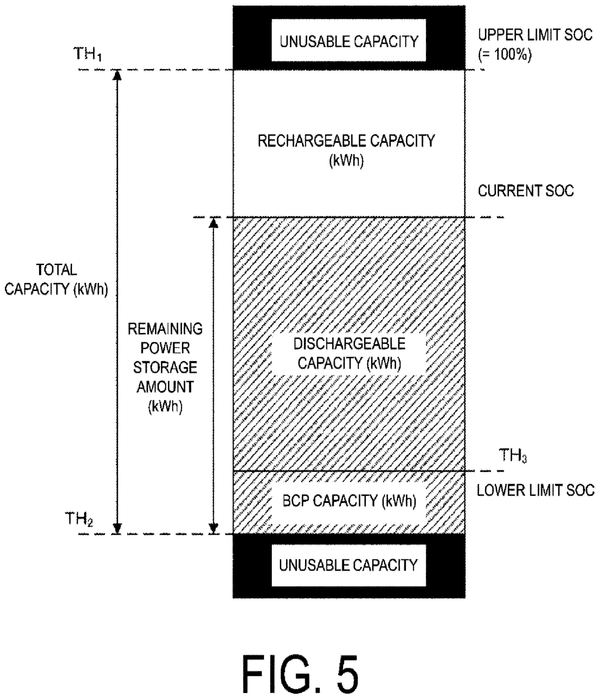

The capacity of the power storage apparatus according to the embodiment will be described below with reference to FIG. 5. The power storage apparatus may be the power storage apparatus 120 or may be the power storage apparatus 140. Hereinafter, the power storage apparatus 140 will be exemplified.

As illustrated in FIG. 5, the capacity of the power storage apparatus 140 includes an unusable capacity. The use of the unusable capacity by the power storage apparatus 140 is restricted for the purpose of suppression of the degradation and the like of the power storage apparatus 140. A threshold value TH₁ is a threshold value specifying the unusable capacity (upper limit side), and a threshold value TH₂ is a threshold value specifying the unusable capacity (lower limit side). The capacity of the power storage apparatus 140 may include an emergency-time capacity (business continuity plan (BCP) capacity) for an emergency situation such as a disaster. A threshold value TH₃ is a threshold value specifying the BCP capacity.

The following explanation will be given considering that the total capacity of the power storage apparatus 140 is a capacity excluding the unusable capacity. In a normal state other than the state of an emergency situation, the BCP capacity is not used, and therefore the capacity that can be discharged (dischargeable capacity) from the power storage apparatus 140 may be a value obtained by excluding the BCP capacity from the electrical power accumulated in the power storage apparatus 140 (remaining power storage amount). The capacity that can be charged (rechargeable capacity) in the power storage apparatus 140 is a value obtained by excluding the remaining power storage amount from the total capacity. Note that the sum of the remaining power storage amount and the unusable capacity (lower limit side) is referred to as a power storage capacity for convenience.

The remaining power storage amount of the power storage apparatus 140 (hereinafter referred to as state of charge (SOC)) may be defined taking the capacity between TH₁ and TH₂ (i.e., the total capacity of the power storage apparatus 140) as a reference. Specifically, the SOC of the power storage apparatus 140 is represented by the ratio of the power storage capacity of the power storage apparatus 140 to the total capacity of the power storage apparatus 140. An upper limit SOC is specified by the threshold value TH₁ described above. A lower limit SOC is specified by the threshold value TH₃.

In such a case, the SOC may be measured by a method using a curve (hereinafter, an SOC-OCV curve) that represents the relationship between the SOC and an open circuit voltage (OCV). In such a method, the SOC can be measured by detecting the voltage value of an output end of the power storage apparatus 140. However, the method of measuring the SOC is not limited thereto, and may be a method using the integration of currents that accompany the charge or discharge of the power storage apparatus 140.

Furthermore, the total capacity may be remeasured by periodic maintenance of the power storage apparatus 140. Specifically, the re-measurement is performed by discharge of the power storage apparatus 140 from a fully charged state to a predetermined discharged state. The predetermined discharged state is a state in which the BCP capacity has been discharged. Note that the discharge does not include that of the unusable capacity (lower limit side). In the case of measuring the SOC using the SOC-OCV curve, voltage values corresponding to the upper limit SOC and the lower limit SOC may be redefined by the above-mentioned maintenance.

In the embodiment, the total capacity of the power storage apparatus 140 may be represented by SOC = 100%. In such a case, the upper-limit remaining amount may be represented by SOC = 95%. That is, when the specific control is carried out in such a manner that the remaining power storage amount of the power storage apparatus 140 does not exceed the upper-limit remaining amount, a rechargeable capacity of SOC = 5% or more is secured.

### Control Method

The control method according to the embodiment will be described below. Here, a case where the power storage apparatus 140, which is an example of the specific power storage apparatus, is controlled will be mainly described.

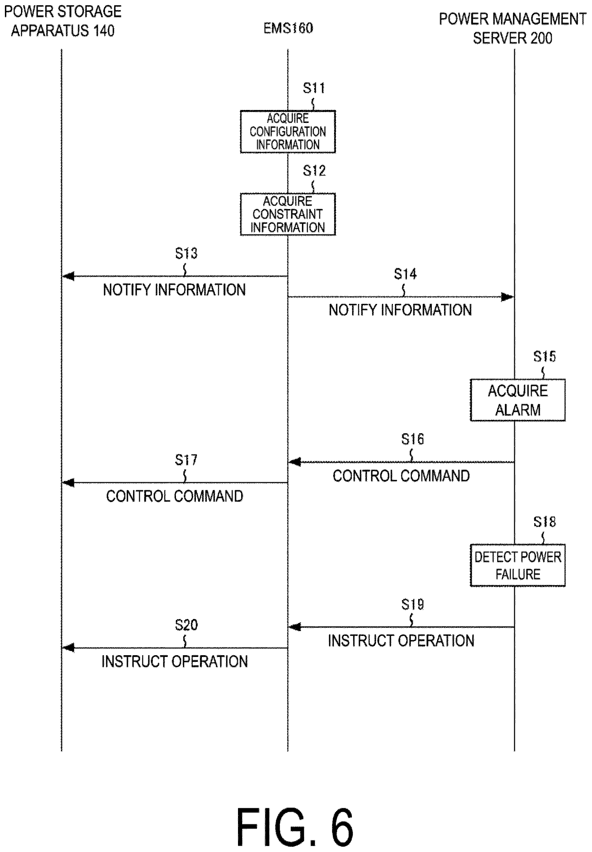

As illustrated in FIG. 6, in step S11, the EMS 160 acquires configuration information. The configuration information is information for judging whether the second condition is satisfied. The configuration information may be manually input into the EMS 160. The configuration information may be collected (received) by the EMS 160 from each device installed in the facility 100. The configuration information includes information on the distributed power supply other than the power storage apparatus 140 installed in the facility 100. The configuration information may include information indicating whether the distributed power supply other than the power storage apparatus 140 is connected on the upstream side (power grid 12 side) relative to the power storage apparatus 140 or the distributed power supply other than the power storage apparatus 140 is connected on the downstream side (opposite side to the power grid 12) relative to the power storage apparatus 140. The configuration information may include information indicating the facility capacity of the distributed power supply other than the power storage apparatus 140, and may include information indicating the type of the distributed power supply other than the power storage apparatus 140. The configuration information may include information on the power storage apparatus 140 installed in the facility 100.

Here, the configuration information may be considered to be configuration information in the independent state related to the facility 100. However, in a case where there is no device that cannot be used in the independent state at the time of switching from the connected state to the independent state, the configuration information of the independent state related to the facility 100 may be the same as the configuration information of the connected state related to the facility 100.

In step S12, the EMS 160 acquires constraint information. The constraint information is information for specifying the first condition described above. For example, the constraint information includes information for specifying the upper-limit remaining amount. In the embodiment, the constraint information may be manually input into the EMS 160.

In step S13, the EMS 160 notifies the power storage apparatus 140 of the information regarding whether the first condition is applied to the power storage apparatus 140. The information is specified by the configuration information and the constraint information. Here, a case where the first condition is applied to the power storage apparatus 140 will be described.

In step S14, the EMS 160 notifies the power management server 200 of the information regarding whether the first condition is applied to the power storage apparatus 140. The information is specified by the configuration information and the constraint information. Here, a case where the first condition is applied to the power storage apparatus 140 will be described.

In step S 15, the power management server 200 acquires an alarm indicating that there is a possibility of switching from the connected state to the independent state. The alarm may be acquired from an external server other than the power management server 200. For example, the alarm may include an alarm indicating that a planned power failure is scheduled. The alarm may be an alarm regarding a natural disaster indicating that an unplanned power failure (e.g., a power failure through the whole district) may occur.

In step S 16, the power management server 200 transmits a control command related to the power storage apparatus 140 to the EMS 160. This control command is a control command giving an instruction to charge or discharge the power storage apparatus 140 in such a manner that the remaining power storage amount of the power storage apparatus 140 does not exceed the upper-limit remaining amount.

In step S 17, the EMS 16 transmits a control command to the power storage apparatus 140 in accordance with the control command received from the power management server 200.

Step S16 and step S17 are an example of the specific control described above.

In step S 18, the power management server 200 detects a power failure. The power failure is an example of a trigger for switching from the connected state to the independent state.

In step S19, the power management server 200 transmits, to the EMS 160, an operation instruction to switch the operation of the power storage apparatus 140 to the independent operation.

In step S20, the EMS 160 transmits, to the power storage apparatus 140, an operation instruction to switch the operation of the power storage apparatus 140 to the independent operation in accordance with the operation instruction received from the power management server 200.

### Actions and Effects

In the embodiment, the power management server 200 judges whether the first condition to be satisfied by the remaining power storage amount of the power storage apparatus is defined, when switching from the connected state to the independent state. When the power storage apparatus is a specific power storage apparatus for which the first condition is defined, the controller 230 carries out specific control for controlling the specific power storage apparatus in such a manner as to make the remaining power storage amount of the specific power storage apparatus satisfy the first condition. According to the above configuration, the operation of the specific power storage apparatus, which is a power storage apparatus with the first condition defined (the power storage apparatus 140 in the embodiment), may be appropriately switched from the connected operation to the independent operation. In other words, a situation in which the specific power storage apparatus cannot be used in the independent state may be avoided.

In the embodiment, the first condition may be applied in a case in which the configuration related to the distributed power supply other than the power storage apparatus 140 installed in the facility 100 satisfies the second condition. According to the above configuration, the specific control for controlling the specific power storage apparatus can be carried out in such a manner as to make the remaining power storage amount of the specific power storage apparatus satisfy the first condition only in a case of assuming that a charging margin of the specific power storage apparatus needs to be secured in the independent state.

### Variation 1

Variation 1 of the embodiment will be described below. In the following, differences from the embodiment will be mainly described.

In the embodiment, the case in which the EMS 160 is interposed has been exemplified. In contrast, a case in which no EMS 160 is interposed will be described in Variation 1.

### Control Method

A control method according to Variation 1 will be described below. Here, a case where the power storage apparatus 140, which is an example of the specific power storage apparatus, is controlled will be mainly described.

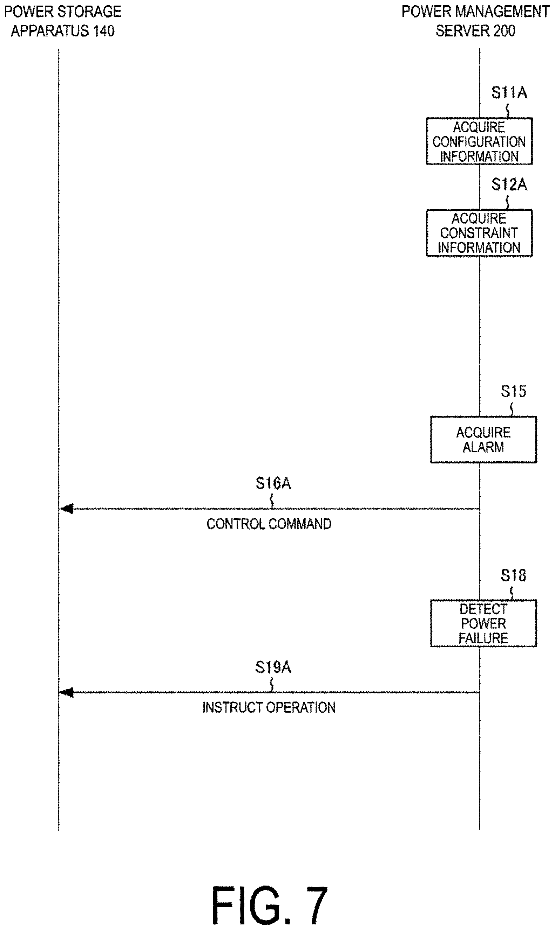

As illustrated in FIG. 7, in step S11A, the power management server 200 acquires configuration information. The configuration information may be manually input into the power management server 200. The configuration information may be collected (received) by each device installed in the facility 100 or by the power management server 200. The configuration information includes information on the distributed power supply other than the power storage apparatus 140 installed in the facility 100. The configuration information may include information indicating whether the distributed power supply other than the power storage apparatus 140 is connected on the upstream side (power grid 12 side) relative to the power storage apparatus 140 or the distributed power supply other than the power storage apparatus 140 is connected on the downstream side (opposite side to the power grid 12) relative to the power storage apparatus 140. The configuration information may include information indicating the facility capacity of the distributed power supply other than the power storage apparatus 140, and may include information indicating the type of the distributed power supply other than the power storage apparatus 140. The configuration information may include information on the power storage apparatus 140 installed in the facility 100.

In step S12A, the power management server 200 acquires constraint information. The constraint information is information for specifying the first condition described above. For example, the constraint information includes information for specifying the upper-limit remaining amount. In Variation 1, the constraint information may be manually input into the power management server 200. Here, a case where the first condition is applied to the power storage apparatus 140 will be described.

In step S15, the power management server 200 acquires an alarm indicating that there is a possibility of switching from the connected state to the independent state. The alarm may be acquired from an external server other than the power management server 200. For example, the alarm may include an alarm indicating that a planned power failure is scheduled. The alarm may be an alarm regarding a natural disaster indicating that an unplanned power failure (e.g., a power failure through the whole district) may occur.

In step S16A, the power management server 200 transmits a control command related to the power storage apparatus 140, to the power storage apparatus 140. This control command is a control command giving an instruction to charge or discharge the power storage apparatus 140 in such a manner that the remaining power storage amount of the power storage apparatus 140 does not exceed the upper-limit remaining amount.

Step S16A is an example of the specific control described above.

In step S18, the power management server 200 detects a power failure. The power failure is an example of a trigger for switching from the connected state to the independent state.

In step S19A, the power management server 200 transmits, to the power storage apparatus 140, an operation instruction to switch the operation of the power storage apparatus 140 to the independent operation.

### Variation 2

Variation 2 of the embodiment will be described below. In the following, differences from the embodiment will be mainly described.

In the embodiment, the case where the constraint information is manually input into the EMS 160 has been exemplified. In contrast, a case in which the constraint information is collected (received) from the power storage apparatus 140 will be described in Variation 2.

### Control Method

A control method according to Variation 2 will be described below. Here, a case where the power storage apparatus 140, which is an example of the specific power storage apparatus, is controlled will be mainly described.

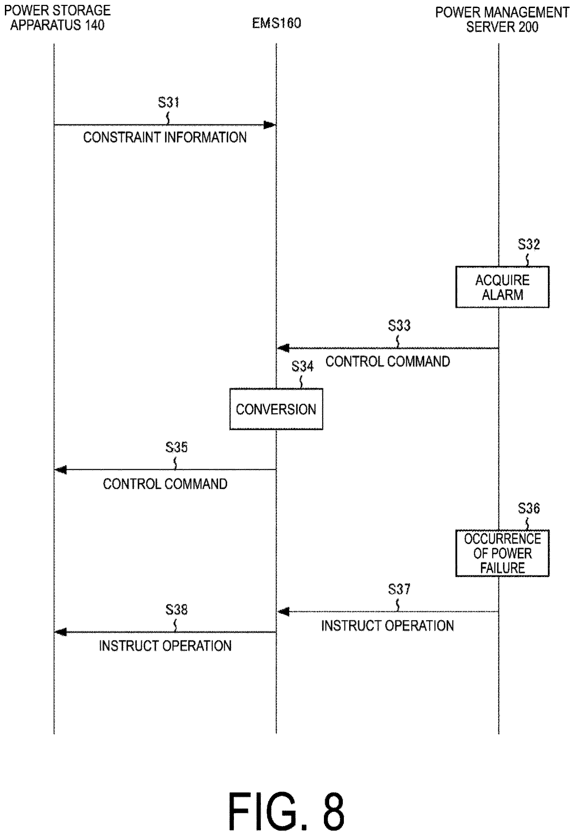

As illustrated in FIG. 8, in step S31, the power storage apparatus 140 transmits constraint information to the EMS 160. The constraint information is information for specifying the first condition described above. For example, the constraint information includes information for specifying the upper-limit remaining amount.

Here, the configuration information may be known to the EMS 160. Alternatively, the configuration information is known to the power storage apparatus 140, and the power storage apparatus 140 may transmit the constraint information to the EMS 160 when the second condition is satisfied. Here, a case where the first condition is applied to the power storage apparatus 140 will be described.

In step S32, the power management server 200 acquires an alarm indicating that there is a possibility of switching from the connected state to the independent state. The alarm may be acquired from an external server other than the power management server 200. For example, the alarm may include an alarm indicating that a planned power failure is scheduled. The alarm may be an alarm regarding a natural disaster indicating that an unplanned power failure (e.g., a power failure through the whole district) may occur.

In step S33, the power management server 200 transmits a control command related to the power storage apparatus 140 to the EMS 160. Here, the control command may be transmitted regardless of whether or not the first condition is satisfied.

In step S34, the EMS 160 converts the control command received from the power management server 200. To be specific, the EMS 160 converts the control command received from the power management server 200 in such a manner that the remaining power storage amount of the power storage apparatus 140 does not exceed the upper-limit remaining amount.

In step S35, the EMS 160 transmits the converted control command to the power storage apparatus 140. This control command is a control command giving an instruction to charge or discharge the power storage apparatus 140 in such a manner that the remaining power storage amount of the power storage apparatus 140 does not exceed the upper-limit remaining amount.

Step S34 and step S35 are an example of the specific control described above.

In step S36, the power management server 200 detects a power failure. The power failure is an example of a trigger for switching from the connected state to the independent state.

In step S37, the power management server 200 transmits, to the EMS 160, an operation instruction to switch the operation of the power storage apparatus 140 to the independent operation.

In step S38, the EMS 160 transmits, to the power storage apparatus 140, an operation instruction to switch the operation of the power storage apparatus 140 to the independent operation in accordance with the operation instruction received from the power management server 200.

### Variation 3

Variation 3 of the embodiment will be described below. In the following, differences from Variation 2 will be mainly described.

In Variation 2, the case in which the EMS 160 is interposed has been exemplified. In contrast, a case in which no EMS 160 is interposed will be described in Variation 3.

### Control Method

A control method according to Variation 3 will be described below. Here, a case where the power storage apparatus 140, which is an example of the specific power storage apparatus, is controlled will be mainly described.

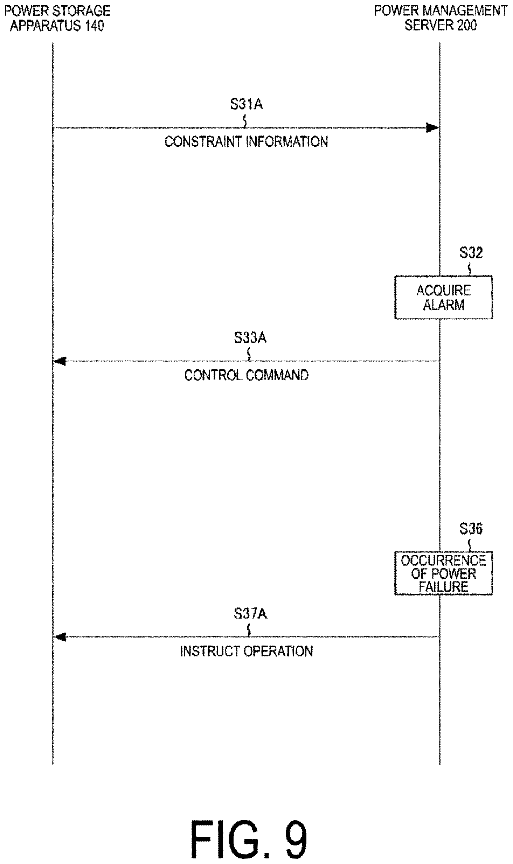

As illustrated in FIG. 9, in step S31A, the power storage apparatus 140 transmits constraint information to the power management server 200. The constraint information is information for specifying the first condition described above. For example, the constraint information includes information for specifying the upper-limit remaining amount.

Here, the configuration information may be known to the power management server 200. Alternatively, the configuration information is known to the power storage apparatus 140, and the power storage apparatus 140 may transmit the constraint information to the power management server 200 when the second condition is satisfied. Here, a case where the first condition is applied to the power storage apparatus 140 will be described.

In step S32, the power management server 200 acquires an alarm indicating that there is a possibility of switching from the connected state to the independent state. The alarm may be acquired from an external server other than the power management server 200. For example, the alarm may include an alarm indicating that a planned power failure is scheduled. The alarm may be an alarm regarding a natural disaster indicating that an unplanned power failure (e.g., a power failure through the whole district) may occur.

In step S33A, the power management server 200 transmits a control command related to the power storage apparatus 140, to the power storage apparatus 140. This control command is a control command giving an instruction to charge or discharge the power storage apparatus 140 in such a manner that the remaining power storage amount of the power storage apparatus 140 does not exceed the upper-limit remaining amount.

Step S33A is an example of the specific control described above.

In step S36, the power management server 200 detects a power failure. The power failure is an example of a trigger for switching from the connected state to the independent state.

In step S37A, the power management server 200 transmits, to the power storage apparatus 140, an operation instruction to switch the operation of the power storage apparatus 140 to the independent operation.

### Variation 4

Variation 4 of the embodiment will be described below. In the following, differences from the embodiment will be mainly described.

In Variation 4, the power management server 200 carries out alternative-reading control in which the reading of the remaining power storage amount of the specific power storage apparatus is changed to the reading of a remaining power storage amount that is different from the actual remaining power storage amount during the period in which the specific control is carried out. Specifically, the alternative-reading control may be control in which the upper-limit remaining amount is regarded as the total capacity and is read for the remaining power storage amount of the power storage apparatus 140.

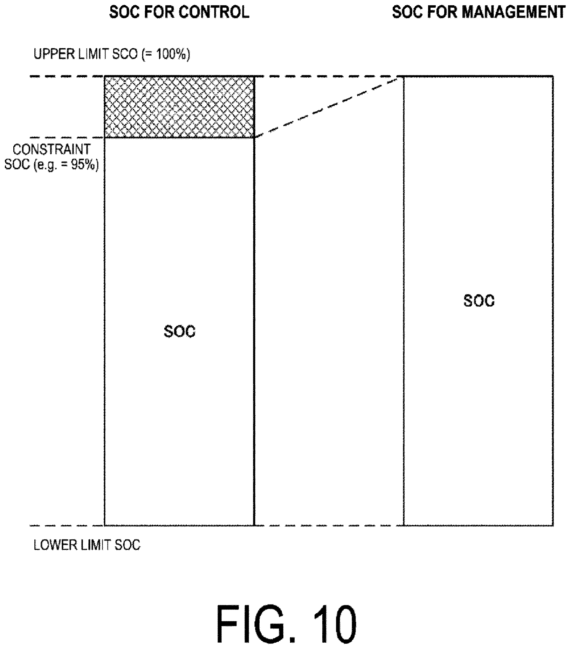

For example, as illustrated in FIG. 10, a case will be considered in which the total capacity (upper limit SOC in FIG. 10) is 100% and the upper-limit remaining amount (constraint SOC in FIG. 10) is 95%. An SOC for control is an SOC used for control of the power storage apparatus 140 and is an SOC before the alternative-reading control is carried out. An SOC for management is an SOC notified to a user and is an SOC after the alternative-reading control is carried out.

During the period in which the specific control is carried out, the remaining power storage amount of the power storage apparatus 140 is controlled not to exceed the upper-limit remaining amount. However, the user is bothered by a feeling of strangeness when such a state continues for long that the power storage apparatus 140 is not fully charged. That is, the user has confirmed that the instruction to cause the SOC to be 100% was given, but the SOC (SOC for management) notified to the user does not readily reach 100%, which brings a feeling of strangeness to the user. Therefore, the alternative-reading control described above is carried out in Variation 4.

For example, the power management server 200 may multiply the actual SOC (SOC for control) by a coefficient (e.g., 100/95) obtained by dividing the total capacity by the upper-limit remaining amount. The alternative-reading control may be carried out when the SOC is equal to or larger than a certain value (e.g., 50%). The alternative-reading control may be carried out when the SOC has reached the constraint SOC.

### Variation 5

Variation 5 of the embodiment will be described below. In the following, differences from the embodiment will be mainly described.

As described above, the specific power storage apparatus is a power storage apparatus for which the first condition is defined. In Variation 5, a variation of the specific power storage apparatus will be described.

Firstly, the specific power storage apparatus may receive a control command transmitted from the EMS 160 or the power management server 200 after switching from the connected state to the independent state when the first condition is satisfied, and may stop receiving the control command transmitted from the EMS 160 or the power management server 200 without switching from the connected state to the independent state when the first condition is not satisfied.

That is, the specific power storage apparatus has a function of autonomously judging whether the first condition is satisfied, and when the first condition is not satisfied, the specific power storage apparatus may refuse to receive the control command without switching from the connected state to the independent state. In such a case, the specific power storage apparatus may store constraint information for specifying the first condition in advance.

As in the embodiment, the first condition may be defined based on whether the second condition is satisfied. In such a case, the specific power storage apparatus may store configuration information for judging whether the second condition is satisfied in advance.

Secondly, when the first condition is not satisfied, the specific power storage apparatus may be a power storage apparatus where an operation in which the switching from the connected state to the independent state is not allowed is applied. The operation may be an operation defined by a manufacturer of the specific power storage apparatus. The operation may be an operation defined by the user of the facility 100. The operation may be an operation defined by a business operator that manages the power management server 200.

### Other Embodiments

Although the present invention is described by the above-described embodiments, it is to be understood that the description and the drawings, which form a part of this disclosure, do not limit the present invention. Various alternative embodiments, examples, and operational techniques will be apparent from this disclosure to those skilled in the art.

In the disclosure described above, the case has been exemplified in which the controller configured to control the power storage apparatus is the controller 230 of the power management server 200. However, the disclosure described above is not limited to this example. The controller configured to control the power storage apparatus may be the controller 163 of the EMS 160.

Although not particularly mentioned in the above disclosure, after the operation of the power storage apparatus 140 is switched to the independent operation, the remaining power storage amount of the power storage apparatus 140 is allowed to exceed the upper-limit remaining amount.

In the disclosure described above, the power management server 200 controls the charging or discharging of the power storage apparatus 140 in the specific control in such a manner that the remaining power storage amount of the power storage apparatus 140 does not exceed the upper-limit remaining amount. That is, the upper-limit remaining amount is a value that defines the upper limit of the remaining power storage amount of the power storage apparatus 140. However, the disclosure described above is not limited to this example. The power management server 200 may control the charging or discharging of the power storage apparatus 140 in the specific control in such a manner that the remaining power storage amount of the power storage apparatus 140 does not become lower than the lower-limit remaining amount. That is, the lower-limit remaining amount may be a value that defines the lower limit of the remaining power storage amount of the power storage apparatus 140. In this case, the first condition may include a condition that the remaining power storage amount of the power storage apparatus 140 is equal to or larger than the lower-limit remaining amount.

According to the configuration described above, the dischargeable capacity can be secured in the independent state. The alternative-reading control described in Variation 4 may be applied to a case in which the lower-limit remaining amount is defined. Both the upper-limit remaining amount and the lower-limit remaining amount may be defined.

In the disclosure described above, the case has been exemplified in which the upper-limit remaining amount is represented by the SOC. However, the disclosure described above is not limited to this example. The upper-limit remaining amount may be represented by kWh.

In the above-described disclosure, the power storage apparatus 140 has been exemplified as the specific power storage apparatus with the first condition defined. However, the disclosure described above is not limited to this example. The specific power storage apparatus may include the power storage apparatus 120. Alternatively, even when the specific power storage apparatus is the power storage apparatus 140, the power storage apparatus 140 may be a stationary power storage apparatus instead of the vehicle-mounted power storage apparatus.

In the above-discussed disclosure, the first condition may be a condition that is applied when the second condition is satisfied, and may be a condition that is not applied when the second condition is not satisfied.

When the first condition is a condition applied in the case where the second condition is satisfied, the following case is assumed. For example, when a specific distributed power supply capable of supplying electrical power to the power storage apparatus 140 in the independent state is installed in the facility 100, a case may be assumed in which the specific control is carried out to control the specific power storage apparatus in such a manner that the remaining power storage amount of the specific power storage apparatus does not exceed the upper-limit remaining amount. On the other hand, when the first condition is a condition that is not applied in the case where the second condition is not satisfied, the following case is assumed. For example, when the specific distributed power supply is not installed in the facility 100, a case may be assumed in which the specific control for controlling the specific power storage apparatus in such a manner as to make the remaining power storage amount of the specific power storage apparatus satisfy the first condition is not carried out, and the control in which the remaining power storage amount of the specific power storage apparatus exceeds the upper-limit remaining amount is permitted.

The first condition may not be defined based on the second condition. In other words, the first condition may be applied regardless of whether or not the second condition is satisfied.

Although not particularly mentioned in the above disclosure, the condition for switching the power storage apparatus 140 from the connected state to the independent state may be referred to as a predetermined condition. In such a case, the predetermined condition may be considered to include at least the first condition. The predetermined condition may be considered to include the first condition and the second condition.

Although not particularly mentioned in the above disclosure, the specific power storage apparatus (for example, the power storage apparatus 140) may be installed inside the facility 100 or outside the facility 100.

In the above disclosure, the method in which the EMS 160 or the power management server 200 acquires the constraint information for specifying the first condition has been described (see FIGs. 6 to 9). For example, in the case illustrated in FIG. 6, the constraint information may be stored in advance in a storage of the EMS 160. The storage may be provided in the controller 163. In the case illustrated in FIG. 7, the constraint information may be stored in advance in a storage of the power management server 200. The storage may be provided in the controller 230 or may be provided in the manager 210. In the cases illustrated in FIGs. 8 and 9, the constraint information may be stored in the power storage apparatus 140.

In the above disclosure, the method in which the EMS 160 or the power management server 200 acquires the configuration information for judging whether the second condition is satisfied has been described (see FIGs. 6 and 7). For example, in the case illustrated in FIG. 6, the configuration information may be stored in advance in the storage of the EMS 160. The storage may be provided in the controller 163. In the case illustrated in FIG. 7, the configuration information may be stored in advance in the storage of power management server 200. The storage may be provided in the controller 230 or may be provided in the manager 210.

Although not particularly limited, the EMS 160 and the power management server 200 may manage the acquired configuration information. That is, the EMS 160 and the power management server 200 may manage the information indicating whether the distributed power supply other than the power storage apparatus 140 is connected on the upstream side (power grid 12 side) relative to the power storage apparatus 140 or the distributed power supply other than the power storage apparatus 140 is connected on the downstream side (opposite side to the power grid 12) relative to the power storage apparatus 140. The EMS 160 and the power management server 200 may manage the information indicating the facility capacity of the distributed power supply other than the power storage apparatus 140, and may manage the information indicating the type of the distributed power supply other than the power storage apparatus 140. The EMS 160 and the power management server 200 may manage whether the configuration information in the independent state related to the facility 100 is different from the configuration information in the connected state related to the facility 100.

In the above-described disclosure, ECHONET Lite (registered trademark) has been mainly explained. However, the disclosure described above is not limited to this example. The above disclosure is also applicable to other protocols such as SEP2.0 and KNX.

Although not particularly mentioned in the disclosure, at least some functions of the EMS 160 may be executed by a server provided on the network 11. In other words, the EMS 160 may be provided by a cloud service.

The above disclosure may have the following problems and effects.

Specifically, a facility having a power storage apparatus is considered to include a distributed power supply such as a solar cell apparatus. In such a case, a situation needs to be assumed in which the power storage apparatus is charged with the power generated by the solar cell apparatus in the independent state where the facility is disconnected from the power grid.

Under such circumstances, as a result of intensive studies, the inventors have found it necessary to consider the following technical matter: the remaining power storage amount (for example, the state of charge (SOC)) of the power storage apparatus needs to satisfy a predetermined condition when the power storage apparatus switches from the connected state in which the facility is connected to a power grid to the independent state. That is, the inventors have found that there is a possibility that the power storage apparatus does not switch from the operation in the connected state (hereinafter referred to as the connected operation) to the operation in the independent state (hereinafter referred to as the independent operation) unless the remaining power storage amount of the power storage apparatus satisfies the predetermined condition.

The above-described disclosure has been conceived to solve the problems mentioned above, and makes it possible to provide a power system and a control method capable of appropriately switching the operation of a power storage apparatus from the connected operation to the independent operation.

### REFERENCE SIGNS

1 Power management system
11 Network
12 Power grid
100 Facility
110 Solar cell apparatus
120 Power storage apparatus
130 Fuel cell apparatus
140 Power storage apparatus
150 Load device
160 EMS
161 First communicator
162 Second communicator
163 Controller
190 Measurement device
200 Power management server
210 Manager
220 Communicator
230 Controller

## Claims

1. A power system comprising:
a power storage apparatus installed in a facility connected to a power grid; and
a controller configured to control the power storage apparatus, wherein
the controller judges whether a first condition to be satisfied by a remaining power storage amount of the power storage apparatus is defined as a condition for switching the power storage apparatus from a connected state in which the facility is connected to the power grid to an independent state in which the facility is disconnected from the power grid, and
when the power storage apparatus is a specific power storage apparatus with the first condition defined, the controller carries out specific control for controlling the specific power storage apparatus to make the remaining power storage amount of the specific power storage apparatus satisfy the first condition.

2. The power system according to claim 1, wherein
the first condition is defined based on whether a configuration related to a distributed power supply other than the specific power storage apparatus installed in the facility satisfies a second condition, and
the controller carries out the specific control when the configuration related to the distributed power supply satisfies the second condition and the first condition is defined.

3. The power system according to claim 1 or 2, wherein
to make the remaining power storage amount of the specific power storage apparatus satisfy the first condition at a timing of switching from the connected state to the independent state, the specific control is carried out to control the specific power storage apparatus before the timing.

4. The power system according to any one of claims 1 to 3,
wherein the controller carries out alternative-reading control in which reading of the remaining power storage amount of the specific power storage apparatus is changed to reading of a remaining power storage amount that is different from an actual remaining power storage amount during a period in which the specific control is carried out.

5. The power system according to any one of claims 1 to 4,
wherein the specific power storage apparatus
receives a control command transmitted from the controller after switching from the connected state to the independent state when the first condition is satisfied, and
stops receiving the control command transmitted from the controller without switching from the connected state to the independent state when the first condition is not satisfied.

6. The power system according to any one of claims 1 to 4,
wherein the specific power storage apparatus is a power storage apparatus where an operation in which the switching from the connected state to the independent state is not allowed is applied when the first condition is not satisfied.

7. A control method comprising:
controlling a power storage apparatus installed in a facility connected to a power grid,
wherein the controlling a power storage apparatus comprises
judging whether a first condition to be satisfied by a remaining power storage amount of the power storage apparatus is defined as a condition for switching the power storage apparatus from a connected state in which the facility is connected to the power grid to an independent state in which the facility is disconnected from the power grid, and
carrying out specific control, when the power storage apparatus is a specific power storage apparatus with the first condition defined, for controlling the specific power storage apparatus to make the remaining power storage amount of the specific power storage apparatus satisfy the first condition.
